# EUROPÄISCHE PATENTSCHRIFT

(11) **EP 2 120 197 B1**
(45) Veröffentlichungstag und Bekanntmachung des Hinweises auf die Patenterteilung: **10.08.2016**
(21) Anmeldenummer: 09159758.3
(22) Anmeldetag: 08.05.2009
(51) Int. Cl.: G06Q 10/00, G06Q 30/02

(54) **Verfahren und System zum elektronischen Erzeugen personenbezogener Preiswerte und/oder Bonuswerte**
Method and system for electronic creation of personal price values and/or bonus values
Procédé et système de production électronique de valeurs de prix et/ou de valeurs de bonus relatives à des personnes

(30) Priorität: 15.05.2008 DE 102008023697
(43) Veröffentlichungstag der Anmeldung: 18.11.2009
(73) Patentinhaber: Vodafone GmbH, 40549 Düsseldorf (DE)
(72) Erfinder: Holtel, Stefan, 85653 Aying (DE)
(74) Vertreter: Müller & Schubert

(56) Entgegenhaltungen:
- EP-A2- 1 324 248
- WO-A1-01/45003
- WO-A1-91/04542
- DE-A1- 10 355 477
- US-A- 5 097 328
- US-A1- 2008 086 377

## Beschreibung

Die vorliegende Erfindung betrifft zunächst ein Verfahren zum elektronischen Erzeugen personenbezogener Preiswerte und/oder Bonuswerte für in einer Warteschlange wartende Personen. Weiterhin betrifft die Erfindung ein System zum elektronischen Erzeugen personenbezogener Preiswerte und/oder Bonuswerte für in einer Warteschlange wartende Personen.

Mit zunehmender Verbreitung rechnergestützter Prozesse und Abläufe entstehen immer neue Anwendungsmöglichkeiten und Anwendungsgebiete, bei denen die Abläufe und Prozesse unter Zuhilfenahme von Rechnern und anderer elektronischer Geräte optimiert werden können.

So ist beispielsweise in der DE 197 05 245 C2 eine Lösung beschrieben, bei der die Absatzsteuerung eines Verkaufsautomaten automatisch gesteuert wird. Werden Produkte im Verkaufsautomaten nicht häufig bezogen, wird der Preis automatisch reduziert.

In der DE 199 26 938 A1 sind ein Verfahren und ein System zur leistungsgerechten Abrechnung des Besuchs von Sportstudios beschrieben. Dabei wird jedem Nutzer ein diesen identifizierender Identifizierungscode zugeordnet. Bei Nutzung des Studios werden die Daten in einem Zugangsdatenspeicher gespeichert. Daraus errechnen sich dann die Beiträge, die aufgrund der Erfassung der Identifikationsdaten von ihrer Höhe variieren können. Auch können die Besucherströme dadurch gesteuert werden, dass in der Datenverarbeitungsanlage automatisch Zeitzonen mit unterschiedlichen Preisen erzeugt werden.

In anderem Zusammenhang sind in der DE 101 55 668 A1 ein Verfahren und Systerr zur automatischen Erfassung einer Anzahl von Personen beschrieben. Eine Bilderfassungseinrichtung nimmt Bildinformationen auf, die anschließend aufbereitet und dann einer Auswerteeinrichtung zugeführt werden. Diese wertet die Bildinformationen derart aus, dass anschließend die Personenanzahl abgeleitet werden kann. Die ermittelte Personenanzahl kann dann beispielsweise an eine Leitstelle geschickt werden, wo zeitnah eine Reaktion auf die erhaltenen Informationen eingeleitet werden kann.

In der EP 1 324 248 A2 ist eine Lösung beschrieben, mittels derer für eine Person ein Zeitplan erstellt werden kann, wann diese Person, in Abhängigkeit von Wartezeiten, bestimmte Orte besuchen kann, Dazu werden über Erfassungseinrichtungen an dem jeweiligen Ort die jeweiligen existierenden Warteschlangen ermittelt. Daraus werden zu erwartende Wartezeiten berechnet, und zwar für fiktive Personen, die sich am Ende der existierenden Warteschlange anstellen würden. Aus diesen Informationen wird für die Person ein Zeitplan erstellt, wann und in welcher Reihenfolge die Person die gewünschten Orte besuchen sollte.

Die US 5,097,328 B offenbart eine Lösung, bei der mittels einer Erfassungseinrichtung Wartezeiten von in einer Warteschlange befindlichen Personen erzeugt werden. Diese Informationen werden den wartenden Personen angezeigt.

In der WO 91/04542 A1 ist eine Lösung offenbart, mittels derer Kunden mit angebotenen Services zusammengeführt werden können. Dazu müssen die Kunden körperlich nicht mehr in einer Warteschlange stehen. Die Kunden erhalten Pager-Geräte, mittels derer sie über den Verlauf des erforderlichen Wartens informiert werden. Durch das Pager-Gerät können sich die Kunden allerdings frei bewegen. Nach Erhalt einer entsprechenden Mitteilung auf dem Pager-Gerät können die Kunden dann an dem entsprechenden Schalter vorstellig werden, um in den Genuss des gewünschten Services zu gelangen.

Häufig treten Situationen auf, in denen sich an einer Verkaufsstelle, beispielsweise einer Kasse, einem Verkaufstresen und dergleichen, an einer Servicestelle, oder dergleichen, längere Warteschlangen wartender Personen bilden. Da die Erfindung nicht auf bestimmte Arten solcher Stellen beschränkt ist, werden derartige Stellen im Folgenden allgemein auch unter dem Sammelbegriff "Zielpunkt" subsumiert. Insbesondere tritt bei Personen oder Organisationen, die einem potentiellen Kunden ein Produkt oder einen Service verkaufen wollen, häufig das Problem auf, dass durch die sich bildenden Warteschlangen die Kunden nicht zeitgerecht bedient werden können. Dies führt häufig zu Frustration bei den wartenden Kunden. Nicht selten verlassen die Kunden dann die Warteschlange, ohne das Produkt oder den Service zu kaufen oder in Anspruch zu nehmen, was den Verkaufsstellen oder Servicestellen wirtschaftliche Verluste beschert.

Derartige Probleme lassen sich mit den aus dem Stand der Technik bisher bekannten Lösungen nicht beseitigen.

Aufgabe der vorliegenden Erfindung ist es daher, ein - insbesondere automatisiertes - Verfahren sowie ein System bereitzustellen, mit dem auf einfache und kostengünstige Weise preisbezogene Preiswerte und/oder Bonuswerte für in einer Warteschlange wartende Personen elektronisch erzeugt werden können.

Diese Aufgabe wird erfindungsgemäß gelöst durch das Verfahren mit den Merkmalen gemäß dem unabhängigen Patentanspruch 1 sowie das System mit den Merkmalen gemäß dem unabhängigen Patentanspruch 5. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, und umgekehrt.

Gemäß dem ersten Aspekt der Erfindung wird ein Verfahren zum elektronischen Erzeugen personenbezogener Preiswerte und/oder Bonuswerte für in einer Warteschlange vor einem Zielpunkt wartende Personen in Abhängigkeit der Länge der Warteschlange der wartenden Personen bereitgestellt, das durch folgende Schritte gekennzeichnet ist:
a) Eine Erfassungseinrichtung die eine Bilderzeugungseinrichtung, welche eine Kamera aufweist, und eine Bildanalyseeinrichtung aufweist, erfasst über die Kamera fortlaufend die Anzahl von Personen, die sich in der Warteschlange vor dem Zielpunkt befinden, analysiert über die Bildanalyseeinrichtung die von der Kamera fortlaufend aufgenommenen Bilder hinsichtlich der Position jeder einzelnen Person in der Warteschlange in Bezug auf den Zielpunkt indem durch die Bildanalyseeinrichtung mittels geeigneter Auswertealgorithmen überprüft wird, in welcher Weise sich der Abstand einer in der Warteschlange wartenden Person von dem Zielpunkt zwischen aufeinanderfolgenden Bildern verändert, um daraus fortlaufend Aussagen darüber zu treffen, wo und in welchem Abstand sich die Person zum Zielpunkt befindet, und erzeugt daraus auf den Zielpunkt bezogene Personen-Positionsdaten;
b) In einer Rechnereinrichtung werden aus den erzeugten Personen-Positionsdaten für jede Person elektronisch personenbezogene Wartezeiten bis zur Erreichung des Zielpunkts berechnet;
c) In einer Berechnungseinrichtung wird aus den berechneten Wartezeiten für zumindest eine Teilmenge von in der Warteschlange befindlichen Personen ein personenbezogener Preiswert in Form eines bestimmten Preises und/oder ein personenbezogener Bonuswert in Form eines Rabattwerts berechnet, sobald die berechnete personenbezogene Wartezeit für eine Person einen vorgegebenen Schwellwert in Form einer akzeptablen Wartezeit übersteigt, oder auf Basis definierter Zeitintervalle in Bezug zu der berechneten Wartezeit;
d) Der berechnete personenbezogene Preiswert und/oder Bonuswert wird der jeweiligen Person elektronisch angezeigt und/oder elektronisch verfügbar gemacht, indem am Zielpunkt eine Kommunikationseinrichtung vorgesehen ist, indem zwischen der Kommunikationseinrichtung und einem der Person zugeordneten elektronischen Endgerät eine Kommunikationsverbindung hergestellt wird, und indem über die Kommunikationsverbindung der berechnete personenbezogene Preiswert und/oder der berechnete personenbezogene Bonuswert auf das elektronische Endgerät übertragen wird.

Das Verfahren dient zum elektronischen und insbesondere automatisierten Erzeugen personenbezogener Preiswerte und/oder Bonuswerte für in einer Warteschlange wartende Personen.

Unter personenbezogenen Werten sollen dabei insbesondere solche Werte verstanden werden, die nicht für alle in einer Warteschlange wartenden Personen einheitlich und gleichermaßen gelten, sondern dass für jede in der Warteschlange wartende Person eigene und damit individuelle Preiswerte und/oder Bonuswerte erzeugt werden können. Die Preise sind somit auch auf die Person, und nicht mehr allein auf das Produkt bezogen. Natürlich kann dabei auch der Fall mit umfasst sein, dass für alle Personen in einer Warteschlange von der Höhe her der gleiche personenbezogene Wert gilt.

Bei den Personen kann es sich beispielsweise um potentielle Käufer eines Produkts, eines Services, um potentielle Empfänger bestimmter Services, oder dergleichen handeln, wobei die Erfindung nicht auf bestimmte Typen von Personengruppen beschränkt ist. Diese Personen können beispielsweise mit einem Verkäufer in Kontakt treten, bei dem es sich um eine Person, eine Organisation oder dergleichen handeln kann, die einer vorstehend genannten Person ein Produkt, einen Service oder dergleichen verkaufen möchte. Beispielsweise könnte es sich um den Verkauf von Eintrittskarten, um den Verkauf von Speisen in einem Schnellrestaurant, oder dergleichen handeln, wobei die Erfindung natürlich nicht auf bestimmte Einsatzzwecke beschränkt ist. Unter einer Warteschlange ist generell eine Ansammlung von in einer Line wartenden Personen zu verstehen, die beispielsweise von einem Verkäufer ein Produkt oder einen Service erwerben wollen, wie beispielsweise Eintrittskarten an einem Kartenschalter, Speisen am Tresen eines Schnellrestaurants, oder dergleichen.

Das Verfahren dient dazu, personenbezogene Preiswerte und/oder Bonuswerte zu erzeugen. Unter einem Preiswert soll dabei insbesondere ein bestimmter Preis verstanden werden, den der Käufer zu zahlen hat. Das Verfahren kann also dazu dienen, einen solchen Preis in Abhängigkeit einer Warteschlange zu variieren. Insbesondere wird eine solche Variation häufig zu einer Preisreduktion führen. Unter einem Bonuswert soll insbesondere eine Art Rabattwert verstanden werden. Hierbei muss es sich nicht unbedingt um eine Preisreduzierung handeln. Bonuswerte können auch bestimmte, zunächst nicht monetäre Werte sein, wie beispielsweise Rabattpunkte oder dergleichen, die der in der Warteschlange befindlichen Person zuerkannt werden, etwa dafür, dass diese Person in der Warteschlange ausharrt.

Nachfolgend wird der Ablauf des erfindungsgemäßen Verfahrens in größerem Detail beschrieben.

Zunächst ist eine Erfassungseinrichtung vorgesehen, die insbesondere anbieterseitig zugeordnet ist, beispielsweise auf der Verkäuferseite. Diese Erfassungseinrichtung hat die Aufgabe und Funktion, fortlaufend die Anzahl von Personen, die sich in einer Warteschlange vor einem Zielpunkt befinden sowie die Position jeder einzelnen Person in der Warteschlange in Bezug auf den Zielpunkt zu erfassen und daraus auf den Zielpunkt bezogene Personen-Positionsdaten zu erzeugen. Die Erfassungseinrichtung schafft somit die Möglichkeit, dass fortlaufend Aussagen darüber getroffen werden können, wo und in welchem Abstand sich eine bestimmte Person zum Zielpunkt befindet. Auch ist es auf diese Weise möglich zu bestimmen, in welchem zeitlichen Rahmen sich die Abstände der Personen zu dem Zielpunkt verringern.

Unter dem Zielpunkt wird dabei generell derjenige geographische und/oder zeitliche Punkt verstanden, zu dem die in der Warteschlange wartende Person gelangen möchte und an dem sie beispielsweise tatsächlich an der Reihe ist und bedient wird.

Weiterhin ist eine Rechnereinrichtung vorgesehen. In dieser Rechnereinrichtung werden aus den in der Erfassungseinrichtung erzeugten Personen-Positionsdaten für jede Person elektronisch personenbezogene Wartezeiten bis zur Erreichung des Zielpunkts berechnet.

Schließlich ist auch eine Berechnungseinrichtung vorgesehen. In dieser wird aus den berechneten Wartezeiten für zumindest eine Teilmenge von in der Warteschlange befindlichen Personen ein personenbezogener Preiswert und/oder ein personenbezogener Bonuswert berechnet.

Dabei ist die Erfindung nicht auf bestimmte Ausführungsformen für die Erfassungseinrichtung, die Rechnereinrichtung sowie die Berechnungseinrichtung beschränkt. Einige vorteilhafte, jedoch nicht ausschließliche Beispiele werden im weiteren Verlauf der Beschreibung näher erläutert. Die einzelnen Einrichtungen können jeweils als eigenständige Bauteile ausgebildet sein. Natürlich können auch zwei oder mehr Einrichtungen in beliebiger Kombination in einem einzigen Bauteil zusammengefasst sein. Die einzelnen Einrichtungen sind insbesondere anbieterseitig zugeordnet.

Anschließend wird der berechnete personenbezogene Preiswert und/oder Bonuswert der jeweiligen Person elektronisch angezeigt und/oder elektronisch verfügbar gemacht. Dies kann auf verschiedene Weisen erfolgen. Einige vorteilhafte, jedoch nicht ausschließliche Beispiele werden im weiteren Verlauf der Beschreibung näher erläutert.

Durch das Verfahren wird insbesondere eine einfache und kostengünstige Möglichkeit für eine Warteschlangen-Bonus-Lösung bereitgestellt. Diese Lösung wird gemäß dem ersten Aspekt durch ein Verfahren, und gemäß einem zweiten Aspekt, der weiter unten noch näher beschrieben wird, durch ein besonders ausgestaltetes System realisiert.

Die erfindungsgemäße Lösung bietet insbesondere solchen Personen in einer Warteschlange einen Vorteil in Form eines Bonus und/oder eines bestimmten Preises, die nicht zeitgerecht bedient werden können. Auch wird es mit dem erfindungsgemäßen Verfahren möglich, Bonuswerte über einen längeren Zeitraum anzusammeln. Darüber hinaus ist es mit dem erfindungsgemäßen Verfahren auch möglich, dass anstelle von Geldwährung mit angesammelten Bonuswerten bezahlt werden kann. Die erfindungsgemäße Lösung bietet sich somit vorzugsweise für solche Stellen an, die ihre Kunden nicht zeitgerecht bedienen oder betreuen können, und die ihren Kunden dafür eine Gegenleistung anbieten möchten. Für die in der Warteschlange wartende Person kann die Bereitschaft zu warten dadurch erhöht werden, dass die Person für das Warten eine Gegenleistung erhält, beispielsweise in Form eines reduzierten Preises, eines - insbesondere anzusammelnden - Bonuswerts oder dergleichen.

Die erfindungsgemäße Lösung erzeugt personenbezogene Preiswerte und/oder Bonuswerte in Abhängigkeit von der Länge der Warteschlange der wartenden Personen. Die wartende Person erhält eine auf die Länge der Warteschlange zugeschnittene Gratifikation. Durch die erfindungsgemäße Lösung wird automatisch die beste Balance zwischen der Länge der Warteschlange und dem personenbezogen Preiswert und/oder Bonuswert erzeugt.

Die erfindungsgemäße Lösung identifiziert das beste Verhältnis zwischen dem Preis für ein Produkt, einen Service oder dergleichen und der Wartezeit einer Person in der Warteschlange. Ebenso identifiziert die erfindungsgemäße Lösung das beste Verhältnis zwischen einem gewährten Bonus und der Wartezeit einer Person in der Warteschlange. Die dabei insbesondere automatisch durchgeführten Berechnungen hängen vor allem auch von der Anzahl der in der Warteschlange wartenden Personen ab.

Vorteilhaft kann vorgesehen sein, dass sich die Personen, die an dem erfindungsgemäßen Verfahren teilnehmen wollen, in einem vorangehenden Registrierungsschritt zunächst bei dem System anmelden. Hierzu können die Personen in einem - insbesondere anbieterseitig vorgesehenen - Register vermerkt werden. In einem solchen Register ist es dann beispielsweise möglich, für die registrierten Personen Konten anzulegen, in denen insbesondere für die Personen erzeugte Bonuswerte angesammelt und abgespeichert werden können.

Vorzugsweise kann zur Erzeugung der Personen-Positionsdaten von der Erfassungseinrichtung weiterhin die Veränderung der Position einer Person in der Warteschlange in Bezug zum Zielpunkt und/oder die Bewegungsgeschwindigkeit der Person in Richtung des Zielpunkts erfasst werden. Durch die erfassten Werte wird es für die Erfassungseinrichtung genau möglich zu bestimmen, wie lange eine Person in einer Warteschlange warten muss, bis sie an der Reihe ist. Grundsätzlich ist es ausreichend, dass für die Berechnung der Personen-Positionsdaten die weiter oben genannten Werte ermittelt werden. Die vorstehend genannten zusätzlichen Werte können das Ergebnis noch weiter verfeinern.

Erfindungsgemäß wird in der Berechnungseinrichtung ein personenbezogener Preiswert und/oder ein personenbezogener Bonuswert berechnet, sobald die berechnete Wartezeit für eine Person einen vorgegebenen Schwellwert übersteigt. In der Rechnereinrichtung wird anhand der von der Erfassungseinrichtung erzeugten Personen-Positionswerten, die das Näherrücken der Person an den Zielpunkt widerspiegeln, zunächst berechnet, wie groß die voraussichtliche Wartezeit für die Person sein wird, bis diese den Zielpunkt erreicht. Dabei kann, insbesondere anbieterseitig, einkalkuliert werden, dass eine gewisse kurze Wartezeit akzeptabel ist. Der Wert einer solchen akzeptablen Wartezeit kann dann als Schwellwert hinterlegt werden. Wenn die bezüglich einer bestimmten Person ermittelten Wartezeiten ergeben, dass diese unterhalb des vorgegebenen Schwellenwerts liegen, werden keine preisbezogenen Preiswerte und/oder Bonuswerte für die entsprechende Person erzeugt. Erst wenn die Wartezeiten oberhalb des Schwellenwerts liegen, erfolgt eine derartige Erzeugung personenbezogener Preiswerte und/oder Bonuswerte. Vorteilhaft kann vorgesehen sein, dass die Schwellwerte variabel einstellbar sind, so dass der Anbieter Einfluss auf die Größe beziehungsweise Höhe der Schwellenwerte nehmen kann.

In weiterer Ausgestaltung ist erfindungsgemäß vorgesehen, dass die Berechnung personenbezogener Preiswerte und/oder personenbezogener Bonuswerte auf der Basis definierter Zeitintervalle in Bezug zu der berechneten Wartezeit erfolgt. Über ein solches Zeitintervall, das statisch vorgegeben sein kann, oder das sich dynamisch verändern kann, kann festgelegt werden, wann die personenbezogenen Preiswerte und/oder Bonuswerte erstmalig erzeugt beziehungsweise im weiteren Verlauf auch weiter angepasst und verändert werden können. Beispielsweise ist es auch möglich, dass nach Ablauf bestimmter Zeitintervalle für die wartende Person immer wieder zusätzliche Bonuswerte erzeugt werden. Beispielsweise kann es sich bei den Zeitintervallen um einen bestimmten Zeit-Countdown handeln. Je länger die Wartezeit ist, desto mehr ändern sich die personenbezogenen Preiswerte und/oder Bonuswerte. Das kann beispielsweise linear erfolgen. Denkbar ist aber auch ein exponentieller Verlauf. Je länger die Wartezeit ist, desto günstiger könnten die personenbezogenen Werte für die wartende Person werden. Natürlich könnten die Zeitintervalle auch fest vorgegebene Zeiträume sein. Für jedes Zeitintervall ist beispielsweise eine bestimmte Änderung des personenbezogenen Werts fest vorgegeben. Die Gesamtgröße der Änderung des personenbezogenen Werts hängt dann von der Anzahl der abgelaufenen Zeitintervalle ab, bis die Person den Zielpunkt erreicht hat. Auch dies kann wieder linear, natürlich aber auch exponentiell erfolgen.

Gemäß der vorliegenden Erfindung ist weiterhin vorgesehen, dass der berechnete personenbezogene Preiswert und/oder Bonuswert der jeweiligen Person elektronisch angezeigt und/oder elektronisch verfügbar gemacht wird. Nachfolgend werden hierzu einige vorteilhafte, jedoch nicht ausschließliche Beispiele erläutert, wie dies realisiert werden kann. Vorteilhaft kann dabei auch vorgesehen sein, dass die Personen in der Warteschlange eine Information darüber erhalten, wie lange ihre Wartezeit noch sein wird, und wie sich in diesem Zusammenhang die personenbezogenen Preiswerte und/oder Bonuswerte für sie ändern werden.

Beispielsweise kann vorgesehen sein, dass ermittelte personenbezogene Preiswerte und/oder ermittelte personenbezogene Bonuswerte auf einer zentralen Anzeigeeinrichtung angezeigt werden. Hierbei kann es sich um eine Art Ausgabeeinheit handeln, beispielsweise ein Display, ein Bildschirm, eine Leuchttafel oder dergleichen, auf der die jeweils gültigen personenbezogenen Werte angezeigt werden. Diese Anzeigeeinrichtung ist dann vorzugsweise anbieterseitig zugeordnet. Eine zentrale Anzeigeeinrichtung ist dann insbesondere in solch einer Weise ausgebildet, dass die personenbezogenen Werte für alle in der Warteschlange befindlichen Personen angezeigt werden. Beispielsweise könnte dann auf der Anzeigeeinrichtung allgemein angezeigt werden, bei welchen Wartezeiten sich personenbezogene Preiswerte und/oder Bonuswerte in welchem Maße ändern.

Alternativ oder zusätzlich kann vorgesehen sein, dass ermittelte personenbezogene Preiswerte und/oder ermittelte personenbezogene Bonuswerte in einer zentralen Speichereinrichtung abgespeichert werden. Diese Speichereinrichtung ist dann vorteilhaft anbieterseitig vorgesehen. Eine solche Lösung bietet sich insbesondere dann an, wenn personenbezogene Bonuswerte erzeugt werden, die von den Personen angesammelt werden können. Die Speichereinrichtung kann dann für die Personen eine Art Konto vorhalten, in welchem die anfallenden Bonuswerte addiert werden. Wenn eine Person ihre Bonuswerte einlösen will, können diese dann im erforderlichen Umfang aus der Speichereinrichtung abgerufen werden.

Erfindungsgemäß ist vorgesehen, dass ermittelte personenbezogene Preiswerte und/oder Bonuswerte auf ein einer Person zugeordnetes elektronisches Endgerät übertragen und optional dort abgespeichert werden. In diesem Fall befinden sich die personenbezogenen Werte im direkten Zugriffsbereich der Person. Dabei ist die Erfindung nicht auf bestimmte Typen elektronischer Endgeräte beschränkt. Grundsätzlich ist jede Geräteform denkbar, mittels derer eine Übertragung von Daten möglich ist. Vorteilhaft kann es sich dabei um elektronische Endgeräte handeln, die die Personen ohnehin mit sich führen. Zu denken ist beispielsweise an Mobiltelefone, Personal Digital Assistants (PDA), kleine mobile Computer und dergleichen. Besonders vorteilhaft ist es, wenn die elektronischen Endgeräte zur bidirektionalen Kommunikation ausgelegt sind.

Erfindungsgemäß ist vorgesehen, dass am Zielpunkt eine Kommunikationseinrichtung vorgesehen ist, dass zwischen der Kommunikationseinrichtung und einem der Person zugeordneten elektronischen Endgerät eine Kommunikationsverbindung hergestellt wird, und dass über die Kommunikationsverbindung ermittelte personenbezogene Preiswerte und/oder der ermittelte personenbezogene Bonuswerte übertragen werden. In einem solchen Fall kann beispielsweise vorgesehen sein, dass die in der Warteschlange wartende Person, die ein entsprechendes elektronisches Endgerät, beispielsweise eine Mobiltelefon, mit sich führt, auf die Wartezeit abgestimmte personenbezogene Bonuswerte auf das elektronische Endgerät übertragen bekommt. Das elektronische Endgerät weist vorzugsweise eine Speichereinrichtung auf, in der die übertragenen Bonuswerte abgespeichert werden. Wenn nun die Person ihre angesammelten Bonuswerte einlösen möchte, wird eine Kommunikationsverbindung zwischen dem elektronischen Endgerät und der insbesondere anbieterseitig vorgesehenen Kommunikationseinrichtung aufgebaut. Dazu ist vorteilhaft vorgesehen, dass sich die Kommunikationseinrichtung am Zielpunkt selbst, oder im näheren Umfeld des Zielpunkts befindet. Der Abstand ergibt sich dabei insbesondere aus der Art und Weise, wie die Kommunikationsverbindung hergestellt wird. Ist die Kommunikationsverbindung einmal hergestellt, können die angesammelten Bonuswerte vom elektronischen Endgerät zur Kommunikationseinrichtung übertragen und bei der folgenden Bezahlung berücksichtigt werden. In anderer Ausgestaltung wäre auch denkbar, dass die angesammelten personenbezogenen Bonuswerte in einer anbieterseitig vorgesehenen zentralen Speichereinrichtung abgelegt sind. Die Kommunikationseinrichtung kann dann auf diese zentrale Speichereinrichtung zugreifen. Insbesondere dann, wenn sich die Person zunächst bei dem System angemeldet und registriert hat, könnte von dem elektronischen Endgerät der Person eine Identifizierungsinformation auf die Kommunikationseinrichtung übertragen werden. Anhand der Identifizierungsinformation könnte dann auf das dazugehörige Bonuswert-Konto der Person zugegriffen werden.

Natürlich ist die vorliegende Erfindung nicht auf bestimmte Kommunikationsarten zwischen dem elektronischen Endgerät und der Kommunikationseinrichtung beschränkt. Vorteilhaft, jedoch nicht ausschließlich, könnte eine solche Kommunikation durch die so genannte Nahfeldkommunikation erfolgen. Bei der Nahfeldkommunikation (NFC Near-Field-Communication) handelt es sich generell um eine drahtlose Kommunikationstechnologie für Datenverbindungen über kurze Strecken, das heißt zur ortsnahen Kommunikation. Zwei mit entsprechenden Einrichtungen zur Nahfeldkommunikation ausgerüstete Endeinrichtungen werden kurz aneinander gehalten und identifizieren sich über die Einrichtung zur Nahfeldkommunikation. Nach erfolgreicher Identifizierung kann ein Datenaustausch stattfinden. Die Abstände für eine solche ortsnahe Kommunikation bewegen sich vorteilhaft im Bereich von einigen Zentimetern bis zu einigen Metern.

In anderer Ausgestaltung könnte die Kommunikation auch funkbasiert erfolgen, etwa über das Mobilfunknetz. Wenn das elektronische Endgerät beispielsweise als Mobiltelefon ausgebildet ist, könnte die Kommunikationseinrichtung ebenfalls über ein entsprechendes Kommunikationsmodul verfügen, wobei die Kommunikation zwischen den beiden Teilnehmern dann über das Mobilfunknetz erfolgt.

Erfindungsgemäß ist vorgesehen, dass die Erzeugung der Personen-Positionsdaten mittels einer Bilderzeugungseinrichtung und einer Bildanalyseeinrichtung erfolgt. Die Erfassungseinrichtung weist in einem solchen Fall eine Kamera auf, mit der die in der Warteschlange wartenden Personen fortlaufend erfasst werden. Weiterhin kann eine Bildanalyseeinrichtung vorgesehen sein, die die von der Kamera fortlaufend aufgenommenen Bilder analysiert. Insbesondere kann durch die Bildanalyseeinrichtung überprüft werden, in welcher Weise sich der Abstand einer in der Warteschlange wartenden Person von dem Zielpunkt zwischen aufeinander folgenden Bildern verändert. Dazu verfügt die Bildanalyseeinrichtung vorteilhaft über geeignete Auswertealgorithmen, die aus den analysierten Daten dann auch die zu erwartende Wartezeit berechnen können.

Natürlich kann die Erzeugung der Personen-Positionsdaten auch auf andere Weise erfolgen. Wenn es sich bei den elektronischen Endgeräten der Personen beispielsweise um Mobiltelefone handelt und die Kommunikation über ein Mobilfunknetz erfolgt, können die Positionsdaten beispielsweise auch über eine entsprechende Ortung der Mobiltelefone im Mobilfunknetz, oder anhand von Daten, die beim Betrieb eines Mobiltelefons anfallen, beispielsweise die CelllD oder dergleichen, erfolgen. Natürlich ist auch eine satellitengestützte Positionsbestimmung des elektronischen Endgeräts, beispielsweise mittels GPS, möglich, wenn dieses entsprechend ausgerüstet ist. Andere denkbare Möglichkeiten zur Erzeugung von Personen-Positionsdaten sind haptische Lösungen, NDF-Technologien, mittels eines Lichtschrankensystems, und dergleichen. Die Erfassungseinrichtung muss generell lediglich in der Lage sein, die Anzahl der in einer Warzeschlange wartenden Personen erkennen und bestimmen zu können.

Gemäß einem zweiten Aspekt der Erfindung wird auch ein System zum elektronischen Erzeugen personenbezogener Preiswerte und/oder Bonuswerte für in einer Warteschlange vor einem Zielpunkt wartende Personen in Abhängigkeit der Länge der Warteschlange der wartenden Personen bereitgestellt, aufweisend eine Erfassungseinrichtung, die eine Bilderzeugungseinrichtung, welche eine Kamera aufweist, und eine Bildanalyseeinrichtung aufweist, zur fortlaufenden Erfassung der Anzahl von Personen, die sich in der Warteschlange vor dem Zielpunkt befinden, über die Kamera, sowie zur Analyse der von der Kamera fortlaufend aufgenommenen Bilder hinsichtlich der Position jeder einzelnen Person in der Warteschlange in Bezug auf den Zielpunkt, indem die Bildanalyseeinrichtung mittels geeigneter Auswertealgorithmen zur Überprüfung ausgebildet ist, in welcher Weise sich der Abstand einer in der Warteschlange wartenden Person von dem Zielpunkt zwischen aufeinanderfolgenden Bildern verändert, um daraus fortlaufend Aussagen darüber zu treffen, wo und in welchem Abstand sich die Person zum Zielpunkt befindet, und zur Erzeugung von Personen-Positionsdaten daraus; eine Rechnereinrichtung zur elektronischen Berechnung personenbezogener Wartezeiten aus den erfassten Personen-Positionsdaten; eine Berechnungseinrichtung zur Berechnung eines personenbezogenen Preiswerts in Form eines bestimmten Preises und/oder eines personenbezogenen Bonuswerts in Form eines Rabattwerts für zumindest eine Teilmenge der in der Warteschlange befindlichen Personen aus den berechneten Wartezeiten, sobald die berechnete personenbezogene Wartezeit für eine Person einen vorgegebenen Schwellwert in Form einer akzeptablen Wartezeit übersteigt, oder auf Basis definierter Zeitintervalle in Bezug zu der berechneten Wartezeit; sowie Mittel, um berechnete personenbezogene Preiswerte und/oder Bonuswerte der jeweiligen Person elektronisch anzuzeigen und/oder elektronisch verfügbar zu machen, wobei am Zielpunkt eine Kommunikationseinrichtung vorgesehen ist, über die zum Zwecke der Übertragung ermittelter personenbezogener Preiswerte und/oder Bonuswerte zwischen der Kommunikationseinrichtung und einem einer Person zugeordneten elektronischen Endgerät eine Kommunikationsverbindung herstellbar ist.

Zu der konstruktiven Ausgestaltung und Funktionsweise des Systems, ebenso wie zu dessen Vorteilen und Wirkungen wird ebenfalls auf die vorstehenden Ausführungen zum erfindungsgemäßen Verfahren vollinhaltlich Bezug genommen und verwiesen. Vorteilhaft kann das System Mittel zur Durchführung des wie vorstehend beschriebenen erfindungsgemäßen Verfahrens aufweisen.

Vorteilhaft kann das System eine zentrale Anzeigeeinrichtung zum Anzeigen berechneter personenbezogener Preiswerte und/oder berechneter personenbezogener Bonuswerte und/oder eine zentrale Speichereinrichtung zum Abspeichern berechneter personenbezogener Preiswerte und/oder berechneter personenbezogenen Bonuswerte aufweisen.

Weiterhin kann das System zur Übertragung berechneter personenbezogener Preiswerte und/oder Bonuswerte eine Schnittstelle zu einem einer Person zugeordneten elektronischen Endgerät aufweisen. In weiterer Ausgestaltung können natürlich auch die elektronischen Endgeräte der Personen Bestandteil des Systems sein.

Erfindungsgemäß ist am Zielpunkt eine Kommunikationseinrichtung vorgesehen, über die zum Zwecke der Übertragung ermittelter personenbezogener Preiswerte und/oder Bonuswerte zwischen der Kommunikationseinrichtung und einem einer Person zugeordneten elektronischen Endgerät eine Kommunikationsverbindung herstellbar ist.

Die Erfassungseinrichtung weist eine Bilderzeugungseinrichtung und/oder eine Bildanalyseeinrichtung auf.

Die vorliegende Erfindung geht von dem Grundsatz aus, dass elektronisch gemessen wird, ob eine Warteschlange existiert, und wenn ja, wie sich deren Struktur verändert. Diese Information wird an einen Rechner weitergeleitet und dort mit Preiswerten und/oder Bonuswerten verknüpft. Dann wird eine Verbindung "Entwicklung der Schlange" zu "Höhe der personenbezogenen Werte" hergestellt, beispielsweise über einen geeigneten Algorithmus. Das Ergebnis wird den Personen mitgeteilt, beispielsweise über die Anzeigeeinrichtung oder das elektronische Endgerät.

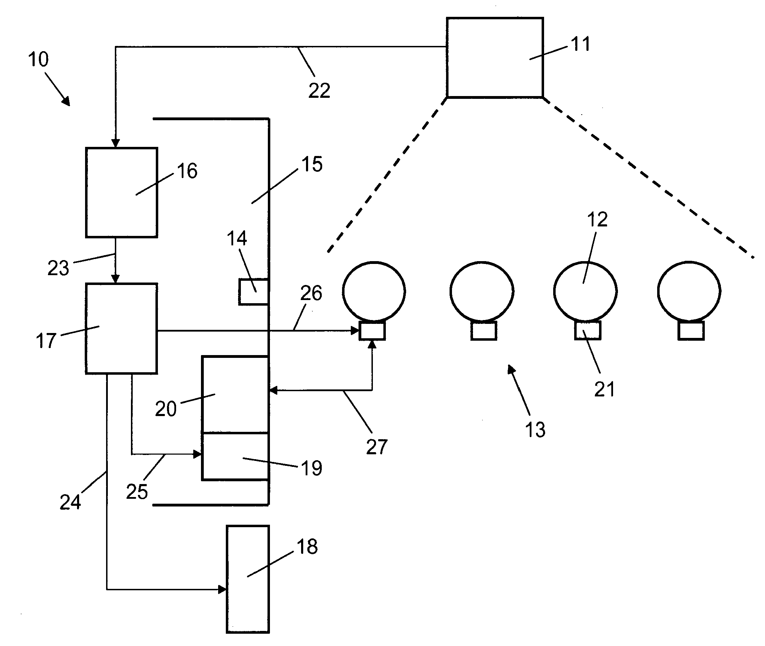

Die Erfindung wird nun anhand eines Ausführungsbeispiels unter Bezugnahme auf die beiliegende Zeichnung näher erläutert. Dabei zeigt die einzige Figur 1 ein erfindungsgemäßes System, in dem das erfindungsgemäße Verfahren ablaufen kann.

Das in der Figur dargestellte System 10 soll Bestandteil eines Schnellrestaurants sein, das über einen Verkaufstresen 15 verfügt. Vor einem Zielpunkt 14, bei dem es sich um die Kasse handeln kann, befindet sich eine Warteschlange 13 aus einer Anzahl von Personen12. Im dargestellten Beispiel sind der besseren Übersicht halber lediglich vier Personen 12 dargestellt. Jede Person 12 führt ein elektronisches Endgerät 21 mit sich, bei dem es sich beispielsweise jeweils um ein Mobiltelefon handeln kann.

Um das System 10 nutzen zu können, kann beispielsweise vorgesehen sein, dass sich die Personen 12 über ihre elektronischen Endgeräte 21 zunächst in diesem registrieren müssen.

Über das System 10 soll nun ermöglicht werden, dass für die in der Warteschlange 13 wartenden Personen 12 personenbezogene Preiswerte und/oder Bonuswerte erzeugt werden. Im Folgenden wird das Verfahren anhand der Erzeugung von Bonuswerten beschrieben, wobei darauf hingewiesen wird, dass die Erzeugung personenbezogener Preiswerte in analoger Weise erfolgen kann.

Die personenbezogenen Bonuswerte sollen in Bezug auf die Länge der Warteschlange 13 und damit in Bezug auf die Wartezeit, die eine Person 12 benötigt, um zum Zielpunkt 14 zu gelangen, erzeugt werden.

Dazu ist zunächst eine Erfassungseinrichtung 11 vorgesehen. Hierbei kann es sich um eine Bilderzeugungseinrichtung, etwa eine Kamera handeln, der eine Bildanalyseeinrichtung zugeordnet ist. Über die Kamera wird fortlaufend die Warteschlange 13 mit den wartenden Personen 12 aufgenommen. In der Bildanalyseeinrichtung werden die Bilder analysiert, insbesondere hinsichtlich der Menge der wartenden Personen 12. Ebenso werden diese charakterisiert, damit sie in allen fortlaufenden Bildern eindeutig wieder erkannt werden können. Auf diese Weise werden für jede Person 12 auf den Zielpunkt 14 bezogene Personen-Positionsdaten erzeugt. Die Bilddaten werden von der Erfassungseinrichtung 11 zu einer Rechnereinrichtung 16 übertragen, wobei der Übertragungsweg durch den Pfeil 22 versinnbildlicht ist. In der Rechnereinrichtung 16 werden die Bilddaten weiter analysiert. Insbesondere wird geprüft, inwieweit sich der Abstand einzelner Personen 12 vom Zielpunkt 14 in aufeinander folgenden Bildern verändert hat. Aus den ermittelten Daten wird anschließend die Wartezeit berechnet, die eine bestimmte Person 12 benötigen wird, bis sie den Zielpunkt 14 erreicht.

Diese berechnete Wartezeit wird anschließend an eine Berechnungseinrichtung 17 weitergeleitet, was durch den Pfeil mit der Bezugsziffer 23 verdeutlicht ist. Bei der Erfassungseinrichtung 11, der Rechnereinrichtung 16 und der Berechnungseinrichtung 17 kann es sich um eigenständige Bauteile handeln. Es kann sich aber auch um rein funktionale Einheiten handeln, die in einem einzigen Bauteil zusammengefasst sind. Ebenso ist denkbar, dass die Kamera der Erfassungseinrichtung 11 als eigenständiges Bauteil ausgebildet ist, während die Bildanalyseeinrichtung und die restlichen der genannten Einrichtungen in einem einzigen Bauteil zusammengefasst sind.

In der Berechnungseinrichtung 17 werden aus den berechneten Wartezeiten für die wartenden Personen 12 jeweils personenbezogene Bonuswerte berechnet. Diese personenbezogenen Bonuswerte können auf verschiedene Weise weiter gehandhabt werden. Beispielsweise ist es denkbar, dass alle erzeugten personenbezogenen Bonuswerte aller Personen 12 der Warteschlange 13 auf einer einzigen zentralen Anzeigeeinrichtung 18 des Systems 10 angezeigt werden. Dazu werden die Bonuswerte auf die Anzeigeeinrichtung 18 übertragen, was durch den Pfeil mit der Bezugsziffer 24 verdeutlicht ist.

Alternativ oder zusätzlich ist denkbar, dass die erzeugten Bonuswerte in einer zentralen Speichereinrichtung 19 des Systems 10 abgespeichert werden. Dies ist durch einen Pfeil mit der Bezugsziffer 25 verdeutlicht. In der Speichereinrichtung 19 können für die einzelnen Personen Bonuswert-Konten angelegt sein, in denen die erzeugten Bonuswerte gesammelt und bei Bedarf abgerufen werden können. Vorteilhaft ist die Speichereinrichtung 19 Bestandteil einer Kommunikationseinrichtung 20. Über diese Kommunikationseinrichtung 20 kann eine Kommunikationsverbindung 27 mit den elektronischen Endgeräten 21 der Personen 12 hergestellt werden, wobei es sich hierbei vorteilhaft um eine so genannte Nahfeldkommunikation handelt. Die Kommunikationseinrichtung 20 kann dann auf die zentrale Speichereinrichtung 19 zugreifen. Insbesondere dann, wenn sich die Person 12 zunächst bei dem System 10 angemeldet und registriert hat, könnte von dem elektronischen Endgerät 21 der Person 12 eine Identifizierungsinformation auf die Kommunikationseinrichtung 20 übertragen werden. Anhand der Identifizierungsinformation könnte dann auf das dazugehörige Bonuswert-Konto der Person 12 zugegriffen werden.

Schließlich ist es auch denkbar, dass die erzeugten Bonuswerte von der Berechnungseinrichtung 17 zu den elektronischen Endgeräten 20 der Personen 12 in der Warteschlange 13 übertragen und dort abgespeichert werden. Dieser Übertragungsweg ist durch den Pfeil mit der Bezugsziffer 26 dargestellt. Wenn in diesem Fall die Person 12 ihre angesammelten Bonuswerte einlösen möchte, wird eine Kommunikationsverbindung 27 zwischen dem elektronischen Endgerät 21 und der Kommunikationseinrichtung 20 aufgebaut. Ist die Kommunikationsverbindung 27 einmal hergestellt, können die angesammelten Bonuswerte vom elektronischen Endgerät 21 zur Kommunikationseinrichtung 20 übertragen und bei der folgenden Bezahlung berücksichtigt werden.

Das erfindungsgemäße System 10 und das erfindungsgemäße Verfahren bieten eine ganze Reihe von Anwendungsmöglichkeiten. Beispielsweise kann systemseitig in der wie vorstehend beschriebenen Weise ein Bonuswertschema erzeugt beziehungsweise berechnet werden. Die Personen 12 in der Warteschlange 13 erhalten personenbezogene Bonuswerte auf ihre elektronischen Endgeräte 21 übertragen, und zwar zu jeder Zeit, in der sie sich in der Warteschlange 13 befinden. Auch kann realisiert werden, dass die Personen 12 eine Benachrichtigung erhalten, wie lange die voraussichtliche Wartezeit noch sein wird und welche Bonuswerte sie dafür voraussichtlich erhalten werden. Die Bonuswertschemata können dabei variieren und bei Bedarf neu berechnet werden. Mittels des Systems 10 wird es möglich zu bestimmen, wie viele Personen 12 in einer Warteschlange 13 warten. Über geeignete Analysemittel kann das System 10 die Anzahl der Personen 12 in der Warteschlange 13 bestimmen. Der Betreiber des Systems 10 kann den wartenden Personen 12 auch neue Bonuswerte anbieten. Das System 10 berechnet dazu beispielsweise Bonuswerte in Bezug auf die Länge der Warteschlange 13 und die Anzahl der wartenden Personen 12. Die ermittelten Bonuswerte können dann auf der zentralen Anzeigeeinrichtung 18 angezeigt und/oder auf die elektronischen Endgeräte 21 der einzelnen Personen 12 übertragen werden. Das System 10 ermöglicht schließlich auch, dass eine Person 12 angesammelte Bonuswerte zum Bezahlen hernimmt. Hierbei kann es sich beispielsweise um solche Bonuswerte handeln, die in seinem elektronischen Endgerät 21 abgespeichert sind. Beim Bezahlen können die Bonuswerte dann in der erforderlichen Höhe reduziert werden.

### Bezugszeichenliste

- 10: System zum elektronischen Erzeugen personenbezogener Preiswerte und/oder Bonuswerte
- 11: Erfassungseinrichtung
- 12: Person
- 13: Warteschlange
- 14: Zielpunkt
- 15: Verkaufstresen
- 16: Rechnereinrichtung
- 17: Berechnungseinrichtung
- 18: Zentrale Anzeigeeinrichtung
- 19: Zentrale Speichereinrichtung
- 20: Kommunikationseinrichtung
- 21: Einer Person zugeordnetes elektronisches Endgerät
- 22: Übertragungsweg zwischen Erfassungseinrichtung und Rechnereinrichtung
- 23: Übertragungsweg zwischen Rechnereinrichtung und Berechnungseinrichtung
- 24: Übertragungsweg zwischen Berechnungseinrichtung und zentraler Anzeigeeinrichtung
- 25: Übertragungsweg zwischen Berechnungseinrichtung und zentraler Speichereinrichtung
- 26: Übertragungsweg zwischen Berechnungseinrichtung und elektronischem Endgerät
- 27: Kommunikationsverbindung zwischen Kommunikationseinrichtung und elektronischem Endgerät

## Patentansprüche

1. Verfahren zum elektronischen Erzeugen personenbezogener Preiswerte und/oder Bonuswerte für in einer Warteschlange (13) vor einem Zielpunkt (14) wartende Personen (12) in Abhängigkeit der Länge der Warteschlange der wartenden Personen, **gekennzeichnet durch** folgende Schritte:
a) Eine Erfassungseinrichtung (11) die eine Bilderzeugungseinrichtung, welche eine Kamera aufweist, und eine Bildanalyseeinrichtung aufweist, erfasst über die Kamera fortlaufend die Anzahl von Personen (12), die sich in der Warteschlange (13) vor dem Zielpunkt (14) befinden, analysiert über die Bildanalyseeinrichtung die von der Kamera fortlaufend aufgenommenen Bilder hinsichtlich der Position jeder einzelnen Person (12) in der Warteschlange (13) in Bezug auf den Zielpunkt (14) indem **durch** die Bildanalyseeinrichtung mittels geeigneter Auswertealgorithmen überprüft wird, in welcher Weise sich der Abstand einer in der Warteschlange wartenden Person von dem Zielpunkt zwischen aufeinanderfolgenden Bildern verändert, um daraus fortlaufend Aussagen darüber zu treffen, wo und in welchem Abstand sich die Person (12) zum Zielpunkt (14) befindet, und erzeugt daraus auf den Zielpunkt (14) bezogene Personen-Positionsdaten;
b) In einer Rechnereinrichtung (16) werden aus den erzeugten Personen-Positionsdaten für jede Person (12) elektronisch personenbezogene Wartezeiten bis zur Erreichung des Zielpunkts (14) berechnet;
c) In einer Berechnungseinrichtung (17) wird aus den berechneten Wartezeiten für zumindest eine Teilmenge von in der Warteschlange (13) befindlichen Personen (12) ein personenbezogener Preiswert in Form eines bestimmten Preises und/oder ein personenbezogener Bonuswert in Form eines Rabattwerts berechnet, sobald die berechnete personenbezogene Wartezeit für eine Person einen vorgegebenen Schwellwert in Form einer akzeptablen Wartezeit übersteigt, oder auf Basis definierter Zeitintervalle in Bezug zu der berechneten Wartezeit;
d) Der berechnete personenbezogene Preiswert und/oder Bonuswert wird der jeweiligen Person (12) elektronisch angezeigt und/oder elektronisch verfügbar gemacht, indem am Zielpunkt (14) eine Kommunikationseinrichtung (20) vorgesehen ist, indem zwischen der Kommunikationseinrichtung (20) und einem der Person (12) zugeordneten elektronischen Endgerät (21) eine Kommunikationsverbindung (27) hergestellt wird, und indem über die Kommunikationsverbindung (27) der berechnete personenbezogene Preiswert und/oder der berechnete personenbezogene Bonuswert auf das elektronische Endgerät (21) übertragen wird.

2. Verfahren nach Anspruch 1, **dadurch gekennzeichnet, dass** zur Erzeugung der Personen-Positionsdaten von der Erfassungseinrichtung (11) weiterhin die Veränderung der Position einer Person (12) in der Warteschlange (13) in Bezug zum Zielpunkt (14) und/oder die Bewegungsgeschwindigkeit der Person (12) in Richtung des Zielpunkts (14) erfasst wird.

3. Verfahren nach einem der Ansprüche 1 oder 2, **dadurch gekennzeichnet, dass** ermittelte personenbezogene Preiswerte und/oder ermittelte personenbezogene Bonuswerte auf einer zentralen Anzeigeeinrichtung (18) angezeigt und/oder in einer zentralen Speichereinrichtung (19) abgespeichert werden.

4. Verfahren nach einem der Ansprüche 1 bis 3, **dadurch gekennzeichnet, dass** ermittelte personenbezogene Preiswerte und/oder Bonuswerte in dem einer Person (12) zugeordneten elektronischen Endgerät (21) abgespeichert werden.

5. System (10) zum elektronischen Erzeugen personenbezogener Preiswerte und/oder Bonuswerte für in einer Warteschlange (13) vor einem Zielpunkt (14) wartende Personen (12) in Abhängigkeit der Länge der Warteschlange der wartenden Personen, aufweisend eine Erfassungseinrichtung (11), die eine Bilderzeugungseinrichtung, welche eine Kamera aufweist, und eine Bildanalyseeinrichtung aufweist, zur fortlaufenden Erfassung der Anzahl von Personen (12), die sich in der Warteschlange (13) vor dem Zielpunkt (14) befinden, über die Kamera, sowie zur Analyse der von der Kamera fortlaufend aufgenommenen Bilder hinsichtlich der Position jeder einzelnen Person (12) in der Warteschlange (13) in Bezug auf den Zielpunkt (14), indem die Bildanalyseeinrichtung mittels geeigneter Auswertealgorithmen zur Überprüfung ausgebildet ist, in welcher Weise sich der Abstand einer in der Warteschlange wartenden Person von dem Zielpunkt zwischen aufeinanderfolgenden Bildern verändert, um daraus fortlaufend Aussagen darüber zu treffen, wo und in welchem Abstand sich die Person (12) zum Zielpunkt (14) befindet, und zur Erzeugung von Personen-Positionsdaten daraus; eine Rechnereinrichtung (16) zur elektronischen Berechnung personenbezogener Wartezeiten aus den erfassten Personen-Positionsdaten; eine Berechnungseinrichtung (17) zur Berechnung eines personenbezogenen Preiswerts in Form eines bestimmten Preises und/oder eines personenbezogenen Bonuswerts in Form eines Rabattwerts für zumindest eine Teilmenge der in der Warteschlange (13) befindlichen Personen (12) aus den berechneten Wartezeiten, sobald die berechnete personenbezogene Wartezeit für eine Person einen vorgegebenen Schwellwert in Form einer akzeptablen Wartezeit übersteigt, oder auf Basis definierter Zeitintervalle in Bezug zu der berechneten Wartezeit; sowie Mittel, um berechnete personenbezogene Preiswerte und/oder Bonuswerte der jeweiligen Person (12) elektronisch anzuzeigen und/oder elektronisch verfügbar zu machen, wobei am Zielpunkt (14) eine Kommunikationseinrichtung (20) vorgesehen ist, über die zum Zwecke der Übertragung ermittelter personenbezogener Preiswerte und/oder Bonuswerte zwischen der Kommunikationseinrichtung (20) und einem einer Person (12) zugeordneten elektronischen Endgerät (21) eine Kommunikationsverbindung (27) herstellbar ist.

6. System nach Anspruch 5, **dadurch gekennzeichnet, dass** dieses eine zentrale Anzeigeeinrichtung (18) zum Anzeigen berechneter personenbezogener Preiswerte und/oder berechneter personenbezogener Bonuswerte und/oder eine zentrale Speichereinrichtung (19) zum Abspeichern berechneter personenbezogener Preiswerte und/oder berechneter personenbezogenen Bonuswerte aufweist.

7. System nach einem der Ansprüche 5 oder 6, **dadurch gekennzeichnet, dass** dieses zur Übertragung berechneter personenbezogener Preiswerte und/oder Bonuswerte eine Schnittstelle zu dem einer Person (12) zugeordneten elektronischen Endgerät (21) aufweist.

## Claims

1. A method of electronically generating person related price values and/or bonus values for persons (12) waiting in a queue (13) in front of a target point (14) in dependency of the length of the queue of the waiting persons, **characterized by** the following steps:
a) A detection device (11) which comprises a device for generating images, which comprises a camera, as well as a device for analysing images, continuously detects via said camera the number of persons (12) in the queue (13) in front of the target point (14), analyses by means of said device for analysing images those images being continuously acquired by said camera with regard to the position pf each single person (12) in said queue (13) in relation to said target point (14), while it is checked through said device for analysing images by means of suitable evaluation algorithms, in which way the distance of a person waiting in the queue in front of the target point changes between successive images, in order to successively generating statements, where and in which distance the person (12) is located to said target point (14), and thereof it generates person-position-data being related to said target point (14);
b) In a computer device (16), person related waiting times until the reach of said target point (14) are electronically calculated for each person (12) from said generated person-position-data;
c) In a computing device (17) for at least a subset of the persons (12) in said queue (13) a person related price value in the form of a determined price and/or a person related bonus value in the form of a discount value is being calculated from the calculated waiting times, as soon as the calculated person related waiting time for a person exceeds a predefined threshold in the form of an acceptable waiting time, or on the basis of defined time intervals in relation to the calculated waiting time;
d) The calculated person related price value and/or bonus value is electronically displayed and/or is electronically made available to the respective person (12), while a communication device (20) is being provided at said target point (14), while a communication link (27) is being established between said communication device (20) and an electronic end terminal (21) being associated to said person (12), and while by means of said communication link (27) the calculated person related price value and/or the calculated person related bonus value is transmitted to said electronic end terminal (21).

2. The method according to claim 1, **characterized in that** for the generation of said person-position data furthermore the change of the position of a person (12) in said queue (13) is detected from said detection device (11) in relation to said target point (14) and/or the moving speed of said person in the direction of said target point (14) is detected.

3. The method according to anyone of claims 1 or 2, **characterized in that** determined person related price values and/or determined person related bonus values are displayed on a central display device (18) and/or are stored in a central storage device (19)

4. The method according to anyone of claims 1 to 3, **characterized in that** determined person related price values and/or bonus values are stored in an electronic end terminal (21) being associated to a person (12).

5. A system (10) for electronically generating person related price values and/or bonus values for persons (12) waiting in a queue (13) in front of a target point (14) in dependency of the length of the queue of the waiting persons, said system comprising a detection device (11) which comprises a device for generating images, which comprises a camera, as well as a device for analysing images, for continuously detecting via said camera the number of persons (12) in the queue (13) in front of the target point (14), as well as for analysing images being continuously acquired by said camera with regard to the position pf each single person (12) in said queue (13) in relation to said target point (14), said device for analysing images being provided for checking by means of suitable evaluation algorithms, in which way the distance of a person waiting in the queue in front of the target point changes between successive images, in order to successively generating statements, where and in which distance the person (12) is located to said target point (14), and for generating person-position-data being related to said target point (14); a computer device (16) for electronically calculating person related waiting time from said generated person-position-data; a computing device (17) for calculating a person related price value in the form of a determined price and/or a person related bonus value in the form of a discount value from the calculated waiting times for at least a subset of the persons (12) in said queue (13), as soon as the calculated person related waiting time for a person exceeds a predefined threshold in the form of an acceptable waiting time, or on the basis of defined time intervals in relation to the calculated waiting time; and means for electronically displaying and/or for electronically making available calculated person related price values and/or bonus values to the respective person, whereby a communication device (20) is being provided at said target point (14), by means of which for the purpose of transmitting of determined person related price values and/or bonus values a communication link (27) can be established between said communication device (20) and an electronic end terminal (21) being associated to a person (12).

6. The system according to claim 5, **characterized in that** it comprises a central display device (18) for displaying person related price values and/or person related bonus values and/or a central storage device (19) for storing calculated person related price values and/or calculated person related bonus values.

7. The system according to anyone of claims 5 or 6, **characterized in that** it comprises an interface to an electronic end terminal (21) being associated to a person for the transmission of calculated person related price values and/or bonus values.

## Revendications

1. Procédé servant à produire de manière électronique des valeurs de prix et/ou des valeurs de bonus en rapport avec des personnes pour des personnes (12) attendant dans une file d'attente (13) avant un point de destination (14) en fonction de la longueur de la file d'attente des personnes qui attendent, **caractérisé par** les étapes suivantes :
a) un système de détection (11), qui présente un système de production d'images présentant une caméra et un système d'analyse d'image, détecte par l'intermédiaire de la caméra en permanence le nombre de personnes (12) qui se trouvent dans la file d'attente (13) avant le point de destination (14), analyse, par l'intermédiaire du système d'analyse d'image, les images prises en permanence par la caméra, en termes de position de chaque personne (12) dans la file d'attente (13) par rapport au point de destination (14) en ce qu'est vérifiée, par le système d'analyse d'image au moyen d'algorithmes d'évaluation appropriés, la manière avec laquelle la distance entre une personne attendant dans la file d'attente et le point de destination varie d'une image à l'autre afin de se prononcer sur cette base en permanence sur le lieu et la distance, où et à laquelle la personne (12) se trouve par rapport au point de destination (14), et produit sur cette base des données de position des personnes en rapport avec le point de destination (14) ;
b) des temps d'attente en rapport avec des personnes jusqu'à atteindre le point de destination (14) sont calculés de manière électronique pour chaque personne (12) dans un système d'ordinateur (16) à partir des données de position des personnes produites ;
c) une valeur de prix en rapport avec des personnes sous la forme d'un prix déterminé et/ou une valeur de bonus en rapport avec des personnes sous la forme d'une valeur de rabais sont calculées dans un système de calcul (17) à partir des temps d'attente calculés pour au moins une partie des personnes (12) se trouvant dans la file d'attente (13) dès que le temps d'attente calculé en rapport avec des personnes pour une personne dépasse une valeur de seuil spécifiée sous la forme d'un temps d'attente acceptable, ou sur la base d'intervalles de temps définis en référence au temps d'attente calculé ;
d) la valeur de prix et/ou la valeur de bonus calculée en rapport avec des personnes sont affichées de manière électronique et/ou sont fournies de manière électrique à l'attention de la personne (12) concernée en ce qu'un système de communication (20) est prévu au niveau du point de destination (14), en ce qu'une liaison de communication (27) est établie entre le système de communication (20) et un terminal (21) électronique associé à la personne (12), et en ce que la valeur de prix calculée en rapport avec des personnes et/ou la valeur de bonus calculée en rapport avec des personnes sont transmises sur le terminal (21) électronique par l'intermédiaire de la liaison de communication (27).

2. Procédé selon la revendication 1, **caractérisé en ce que** par ailleurs la modification de la position d'une personne (12) dans la file d'attente (13) par rapport au point de destination (14) et/ou la vitesse de déplacement de la personne (12) en direction du point de destination (14) sont détectées par le système de détection (11) afin de produire les données de positions des personnes.

3. Procédé selon l'une quelconque des revendications 1 ou 2, **caractérisé en ce que** des valeurs de prix déterminées en rapport avec des personnes et/ou des valeurs de bonus déterminées en rapport avec des personnes sont affichées sur un système d'affichage (18) central et/ou sont enregistrées dans un système de stockage (19) central.

4. Procédé selon l'une quelconque des revendications 1 à 3, **caractérisé en ce que** des valeurs de prix et/ou des valeurs de bonus déterminées en rapport avec des personnes sont enregistrées dans le terminal (21) électronique associé à une personne (12).

5. Système (10) servant à produire de manière électronique des valeurs de prix et/ou des valeurs de bonus en rapport avec des personnes pour des personnes (12) attendant dans une file d'attente (13) avant un point de destination (14) en fonction de la longueur de la file d'attente des personnes qui attendent, présentant un système de détection (11), qui présente un système de production d'images présentant une caméra, et un système d'analyse d'image, servant à détecter en permanence le nombre de personnes (12), qui se trouvent dans la file d'attente (13) avant le point de destination (14), par l'intermédiaire de la caméra, ainsi que servant à analyser les images prises en permanence par la caméra en termes de position de chaque personne (12) dans la file d'attente (13) par rapport au point de destination (14) en ce que le système d'analyse d'image est réalisé afin de vérifier, au moyen d'algorithmes d'évaluation appropriés, la manière avec laquelle la distance entre une personne attendant dans la file d'attente et le point de destination change d'une image à l'autre afin de se prononcer sur cette base en permanence sur le lieu et la distance, où et à laquelle la personne (12) se trouve par rapport au point de destination (14), et servant à produire des données de position des personnes ; un système d'ordinateur (16) servant à calculer de manière électronique des temps d'attente en rapport avec des personnes à partir des données de position des personnes détectées ; un système de calcul (17) servant à calculer une valeur de prix en rapport avec des personnes sous la forme d'un prix déterminé et/ou une valeur de bonus en rapport avec des personnes sous la forme d'une valeur de rabais pour au moins une partie des personnes (12) se trouvant dans la file d'attente (13) à partir des temps d'attente calculés dès que le temps d' attente calculé en rapport avec des personnes dépasse pour une personne une valeur de seuil spécifiée sous la forme d'un temps d'attente acceptable, ou sur la base d'intervalles de temps définis en référence au temps d'attente calculé ; ainsi que des moyens afin d'afficher de manière électronique et/ou de rendre disponibles de manière électronique des valeurs de prix et/ou des valeurs de bonus calculées, en rapport avec des personnes, de la personne (12) concernée, dans lequel un système de communication (20) est prévu au niveau du point de destination (14), par l'intermédiaire duquel une liaison de communication (27) peut être établie entre le système de communication (20) et un terminal (21) électronique associé à une personne (12) dans le but de transmettre des valeurs de prix et/ou des valeurs de bonus déterminées en rapport avec des personnes.

6. Système selon la revendication 5, **caractérisé en ce que** ledit système présente un système d'affichage (18) central servant à afficher des valeurs de prix calculées en rapport avec des personnes et/ou des valeurs de bonus calculées en rapport avec des personnes et/ou un système de stockage (19) central servant à enregistrer des valeurs de prix calculées en rapport avec des personnes et/ou des valeurs de bonus calculées en rapport avec des personnes.

7. Système selon l'une quelconque des revendications 5 ou 6, **caractérisé en ce que** ledit système présente, afin de transmettre des valeurs de prix et/ou des valeurs de bonus calculées en rapport avec des personnes, une interface vers le terminal (21) électronique associé à une personne (12).
